# EUROPÄISCHE PATENTSCHRIFT

(11) **EP 2 226 183 B1**
(45) Veröffentlichungstag und Bekanntmachung des Hinweises auf die Patenterteilung: **08.01.2014**
(21) Anmeldenummer: 10001371.3
(22) Anmeldetag: 11.02.2010
(51) Int. Cl.: B29C 63/02, B29C 63/04

(54) **Verfahren zum Applizieren einer Lackfolie auf ein Fahrzeugteil**
Method for applying a paint film to a part of a vehicle
Procédé d'application d'une feuille de laque sur une pièce d'un véhicule

(30) Priorität: 07.03.2009 DE 102009012239
(43) Veröffentlichungstag der Anmeldung: 08.09.2010
(73) Patentinhaber: Bayerische Motoren Werke Aktiengesellschaft, 80809 München (DE)
(72) Erfinder: Conze, Michael, 85416 Langenbach (DE)

(56) Entgegenhaltungen:
- DE-A1- 3 736 739
- DE-A1- 10 311 267
- DE-A1- 19 809 515
- DE-A1- 19 853 660
- DE-C1- 19 606 395
- US-A- 2 696 865
- US-A- 3 580 787
- US-A1- 2005 092 425

## Beschreibung

Die vorliegende Erfindung betrifft ein Verfahren zum Applizieren einer Lackfolie auf ein Fahrzeugteil gemäß dem Oberbegriff des Patentanspruches 1.

Aus der DE 103 37 155 A1 ist ein Verfahren zum Applizieren einer Lackfolie auf ein Karosserieteil eines Fahrzeugs bekannt, wobei die Lackfolie in einem Formwerkzeug fixiert wird, das geformte Bauteil in das Formwerkzeug eingebracht wird, die Folie auf oder über die Glastemperatur ihrer polymeren Bestandteile erwärmt wird und die Lackfolie auf die Sichtfläche des Karosserieteils durch Verfahren des Bauteils in oder durch die Folienebene und/oder durch Aufpressen der Folie auf die Sichtfläche des fixierten Bauteils aufgezogen wird. Mit dem Applizieren einer Lackfolie auf ein dreidimensional gewölbtes Substrat befasst sich ferner die DE 196 28 966 C1.

Fahrzeugteile bzw. ganze Fahrzeuge mit Lackfolien zu überziehen ist seit Jahrzehnten von als Taxis genutzten Fahrzeugen bekannt. Dabei werden herkömmlich lackierte Fahrzeuge in Werkstätten im Wesentlichen in Handarbeit mit Lackfolien in der für Taxifahrzeuge typischen Farbe überzogen.

Aus der DE 198 53 660 ist eine Vorrichtung zum Kaschieren von Trägerteilen mit einem Bezugsmaterial mit materialstärkenabhängiger "Soft-touch-Eigenschaft" bekannt sowie ein entsprechendes Verfahren.

Das Bezugsmaterial soll mit einer über die gesamte Oberfläche jeweils eines Trägerteils verteilten, gleichen Qualität aufgebracht werden, wobei der Bezugsmaterialverbrauch minimiert und der Kaschiervorgang vereinfacht werden soll. Dies wird mit Hilfe eines Spannrahmens mit einem Bezugsmaterialüberschussbereich und durch Mittel für eine Bezugsmaterialdehnung eines Teilsbereichs des Bezugsmaterialüberschussbereichs bewerkstelligt, wobei mit den Mitteln ganzheitlich eine gleichmäßige Stärke des auf dem Trägerteil anliegenden Bezugs derart erreichbar ist, dass dessen "Soft-touch-Eigenschaft" überall auf dem Trägerteil gewährleistet wird. Bei dem Verfahren wird zur Erreichung einer gleichmäßigen Materialstärke eines Kaschierbezugs auf einem Trägermaterial mindestens ein rahmenrandseitiger Folienüberschussbereich reserviert, von dem mindestens ein streifenartiger partieller Teil unter Materialdehnung ausgezogen wird.

Die US 3,580,787 zeigt eine Kunststoff-Laminiervorrichtung zum Auflaminieren eines schichtförmigen Kunststoffmaterials auf einen plattenförmigen Kern, der mit einem Rückwandpaneel einen rechten Winkel einschließt in einem einzigen Durchführschritt durch die Vorrichtung.

Aus der DE 37 36 739 ist ein Verfahren und eine Vorrichtung zum Aufbringen von nachformbaren Schichtstoffplatten auf Trägerplatten mit konvexen Kanten bekannt.

Aufgabe der Erfindung ist es, ein Verfahren anzugeben, das eine Industrialisierung des Applizierens von Lackfolien auf Karosserieteile ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist der Grundgedanke, Fahrzeugteile vor ihrer Montage mit einer selbstklebenden Lackfolie zu überziehen und zwar in denjenigen Bauteilbereichen, die später am Fahrzeug bei geschlossenen Türen bzw. Klappen von außen sichtbar sind.

Hierzu muss zunächst eine Lackfolie bereitgestellt werden, die eine lackartig erscheinende Vorderseite und eine selbstklebende Rückseite aufweist. Der Begriff "lackartig erscheinend" ist äußerst breit zu verstehen. Die Oberflächenanmutung der Vorderseite der Lackfolie kann beispielsweise der von herkömmlichen hochglänzenden lackierten Fahrzeugteilen entsprechen. Alternativ dazu kann die Vorderseite der Lackfolie auch rau bzw. stumpf im Sinne von "nicht hochglänzend" gestaltet sein. Die Vorderseite der Lackfolie muss auch nicht notwendigerweise glatt sein, sondern kann mit einer Strukturierung versehen sein.

In einem ersten Schritt wird die Lackfolie automatisiert gesteuert mittels einer Spanneinrichtung aufgespannt. Die Spanneinrichtung kann mehrere Spannelemente, wie z.B. drehbar angeordnete Spannrollen, aufweisen, deren Aufgabe es zunächst ist, die Lackfolie im Wesentlichen faltenfrei aufzuspannen. Soll beispielsweise auf eine Motorhaube eine Lackfolie appliziert werden, so kann die Spanneinrichtung durch mehrere entlang der Ränder der Motorhaube angeordnete Spannrollen gebildet sein.

In einem weiteren Schritt wird das Fahrzeugteil z.B. "von unten her" mittels einer automatisiert gesteuerten Verfahreinrichtung an die selbstklebende Rückseite der Lackfolie herangefahren. Dabei ist es unerheblich, ob die Spanneinrichtung raumfest und die Verfahreinrichtung relativ dazu beweglich angeordnet ist, oder umgekehrt, oder ob beide verfahrbar angeordnet sind.

Im Ergebnis kommt die selbstklebende Rückseite der Lackfolie an einer oder an mehreren Stellen zur Anlage mit einer zu überziehenden Vorderseite des Fahrzeugteils. Außenhautteile moderner Fahrzeuge weisen bekanntlich häufig eine komplexe Oberflächengeometrie mit erhabenen bzw. konvexen und konkaven Oberflächenbereichen auf. Beim "Heranbringen" der Lackfolie an das zu überziehende Fahrzeugteil wird die Lackfolie das Fahrzeugteil somit beispielsweise zunächst nur im Bereich eines oder einiger weniger erhabener Oberflächenbereiche berühren.

In einem weiteren Schritt wird die Lackfolie mittels einer automatisiert gesteuerten "Andrückeinrichtung" in Bereichen, die die Vorderseite des zu überziehenden Fahrzeugteils bislang noch nicht berührten, gegen das Fahrzeugteil gedrückt. Die Andrückeinrichtung wird dabei automatisiert gesteuert relativ zur Lackfolie und relativ zum Fahrzeugteil verfahren.

Wesentlich ist, dass der gesamte oben beschriebene Prozess automatisiert gesteuert, d.h. nicht in Handarbeit, sondern gemäß eines vordefinierten Programmablaufs durchgeführt wird. Der Begriff "automatisiert gesteuert" schließt dabei nicht aus, dass in dem Prozess Regelungsschleifen enthalten sind, z.B. zur Nacharbeit in einzelnen Bereichen, bis ein qualitativ einwandfreies Arbeitsergebnis vorliegt.

Als "Andrückeinrichtung" kann beispielsweise eine Andrückrolle verwendet werden, die eine Oberflächenschicht mit einer definierten Elastizität bzw. Nachgiebigkeit aufweist. Hierfür in Frage kommen beispielsweise Rollen, die eine Oberflächenschicht aus einem Elastomermaterial, aus Filz o.ä. aufweisen. Vorzugsweise wird die Andrückrolle automatisiert gesteuert, z.B. von einem Roboter gegen die Vorderseite der Lackfolie gedrückt und relativ zur Lackfolie verfahren, wobei die Andrückrolle schlupffrei oder im Wesentlichen schlupffrei auf der Lackfolie abwälzt.

Wie bereits angedeutet, kann die Spanneinrichtung durch mindestens eine, insbesondere aber durch mehrere entlang von Randbereichen des zu überziehenden Fahrzeugsteils angeordnete Spannrollen gebildet sein. Zum Aufspannen der Lackfolie wird diese an den Spannrollen und/oder weiteren Spannelementen der Spanneinrichtung lösbar fixiert, z.B. lösbar festgeklebt. Die Lackfolie kann auch an den Spannrollen bzw. weiteren Spannelementen fest- bzw. eingeklemmt werden. Denkbar ist ferner, dass die Lackfolie mittels Andrückelementen von außen her gegen die Spannrollen bzw. Spannelemente gedrückt und auf diese Weise festgeklemmt wird. Mittels einer serartigen Spanneinrichtung kann die Lackfolie frei im Raum aufgespannt werden. "Frei" bedeutet in diesem Zusammenhang, dass die Lackfolie nur in Randbereichen, nicht aber in ihrem Mittelbereich eingespannt oder unterstützt oder in anderer Weise gehalten wird.

Nach einer Weiterbildung der Erfindung kann auf die Spannrollen ein zum faltenfreien Aufspannen der Lackfolie erforderliches Drehmoment aufgebracht werden. Hierzu kann beispielsweise einer oder mehreren Spannrollen ein Elektromotor zugeordnet sein, der das erforderliche Vorspannmoment erzeugt. Das Vorspannmoment kann selbstverständlich auch in anderer Weise, z.B. hydraulisch, pneumatisch etc. erzeugt werden.

Für eine industrielle Fertigung kann vorgesehen sein, dass in der Nähe der Spanneinrichtung eine Bevorratungseinrichtung, z.B. ähnlich dem Prinzip eines Paternosters, vorgesehen ist, in der mehrere Lackfolienrollen mit unterschiedlichen Lackfolientypen vorgehalten werden. Die einzelnen Lackfolien können sich beispielsweise hinsichtlich ihrer Farbe oder ihrer Oberflächenstruktur unterscheiden.

Bevor mit dem Überziehen eines Fahrzeugsteils begonnen werden kann, wird mittels einer automatisiert gesteuerten Abrolleinrichtung und/oder mittels einer Greifeinrichtung ein Stück Lackfolie von einer der Lackfolienrollen abgerollt. Das abgerollte Lackfolienstück ist deutlich größer als die zu beschichtende Bauteiloberfläche, da zum Fixieren und Aufspannen der Lackfolie ein gewisses "Übermaß" vorgehalten werden muss.

Für den "Transportvorgang" der Lackfolie von der Lackfolienrolle auf die Spanneinrichtung kann eine Greifeinrichtung mit mehreren oder einer Vielzahl von Saugnäpfen verwendet werden. Die Greifeinrichtung erfasst ein von der Lackfolienrolle abgerolltes oder abzurollendes Stück Lackfolie mit ihren Saugnäpfen und bringt das Lackfolienstück auf die Spanneinrichtung auf. "Aufbringen" bedeutet hierbei, dass Randbereiche des Lackfolienstücks zur Auflage auf der bzw. den Spannrollen und/oder weiteren Spannelementen der Spanneinrichtung kommen.

Anschließend wird das Lackfolienstück an den Spannrollen und/oder weiteren Spannelementen der Spanneinrichtung fixiert, z.B. mittels Klemmelementen eingespannt, welche die Lackfolie gegen die Spannrollen bzw. weiteren Spannelemente der Spanneinrichtung drücken.

Wenn die Lackfolie ordnungsgemäß aufgespannt ist, wird, wie bereits erwähnt, das überziehende Fahrzeugteil an die Lackfolie herangefahren, bis es die Lackfolie zumindest an einer oder mehreren Stellen berührt.

Anschließend wird die Lackfolie mittels der Andrückeinrichtung gegen das Fahrzeugteil gedrückt und zwar ausgehend von denjenigen Bereichen, in denen die Lackfolie bereits am Fahrzeugteil anliegt und sukzessive auch in den übrigen Bereichen. Vor und/oder während des Andrückens der Lackfolie gegen das Fahrzeugteil kann die Lackfolie erwärmt werden, z.B. mittels Warmluft, einer Infrarotstrahlreinrichtung oder in anderer Weise.

Nach einer Weiterbildung der Erfindung wird die Lackfolie um mindestens eine Kante des Fahrzeugteils umgeschlagen. Zur Erzielung eines qualitativ hochwertigen optischen Eindrucks ist dies insbesondere bei Fahrzeugteilen erforderlich, die am fertigen Fahrzeug als Türen bzw. Klappen fungieren bzw. ganz allgemein bei Teilen, die zusammen mit angrenzenden Teilen von außen sichtbare Spalte bilden.

Das "Umschlagen" von Randabschnitten der Lackfolie kann mittels eines schieberartigen Umschlagwerkzeugs erfolgen, das automatisiert gesteuert gegen die Vorderseite der Lackfolie drückt und so bewegt wird, dass die Lackfolie um die betreffende Kante "umgefalzt" bzw. umgeschlagen oder "umgebördelt" wird.

Nach einer Weiterbildung der Erfindung wird die mindestens eine Spannrolle während des Andrückens und/oder während des Umschlagens der Lackfolie automatisiert gesteuert oder aufgrund der von der Lackfolie auf die Spannrolle ausgeübten Zugkraft bzw. aufgrund des von der Lackfolie auf die Spannrolle ausgeübten "Zugmoments" zumindest geringfügig gedreht, so dass entsprechend der durch die Andrückeinrichtung bzw. durch das Umschlagwerkzeug vorgegebenen Bewegung der Lackfolie Folienmaterial "zugegeben" oder "abgezogen" wird. Dabei kann es selbstverständlich zu Dehnungen der Lackfolie in einzelnen Bereichen kommen. Vorzugsweise sollte die gesamte Anlage so abgestimmt sein, dass die Dehnung der Lackfolie höchstens 30 % beträgt, d.h. dass die Lackfolie an keiner Stelle auf mehr als das 1,3-fache ihrer Ausgangslänge gedehnt wird.

Nach dem Umschlagen der Lackfolie um Kanten des Fahrzeugsteils werden die umgeschlagenen Abschnitte mittels eines separaten Andrückwerkzeugs, z.B. gegen eine Rückseite des Fahrzeugteils, gedrückt. Hierzu kann beispielsweise ein rollenartiges Andrückwerkzeug verwendet werden, das eine umlaufende rillenartige Vertiefung hat. Das rollenartige Andrückwerkzeug wird so angesetzt, dass die Kante des Fahrzeugteils, um die die Lackfolie umgeschlagen wurde, in die rillenartige Vertiefung ragt. Anschließend wird das Andrückwerkzeug automatisiert gesteuert entlang der Kante des Fahrzeugteils verfahren, so dass das Werkzeug mit seiner rillenartigen Vertiefung auf der Kante abwälzt und mit seinen Rillenflanken die Lackfolie gegen die Vorderseite und gegen die Rückseite oder auch nur gegen die Rückseite des Fahrzeugsteils drückt.

Während oder nach dem Andrücken des umgeschlagenen Abschnitts der Lackfolie gegen das Fahrzeugteil wird der umgeschlagene Abschnitt der Lackfolie von dem an der Spanneinrichtung verbleibenden Lackfolienabschnitt, der letztlich als Verschnitt entsorgt werden muss, abgetrennt.

Ein charakteristisches Merkmal des erfindungsgemäßen Verfahrens ist auch darin zu sehen, dass die Lackfolie, zumindest was das Überziehen von klappenartigen bzw. türenartigen Bauteilen anbelangt, die Kanten aufweisen, um welche die Lackfolie umgeschlagen wird, erst nach dem Bekleben der Vorderseite des Fahrzeugteils und nach dem Umschlagen der Lackfolie auf ein "Endformat" beschnitten wird. Die Lackfolie wird also grundsätzlich nicht bereits vor dem Applizieren auf das Fahrzeugteil auf sein Endformat zugeschnitten, sondern erst nachdem es teilweise oder vollständig auf das zu überziehende Fahrzeugteil appliziert wurde.

Um insbesondere im Bereich umgeschlagener Abschnitte der Lackfolie eine gute Haftung der Lackfolie auf der Oberfläche des darunter befindlichen Fahrzeugteils zu erreichen, kann die Lackfolie während und/oder nach dem Umschlagen und Andrücken im kantennahen Bereich erwärmt werden.

Das erfindungsgemäße Verfahren ist dazu geeignet, im industriellem Maßstab, d.h. in Großserienfertigung, die gesamte Vorderseite von Fahrzeugteilen, d.h. diejenige Seite, die beim fertigen Fahrzeug von außen sichtbar ist, mit einer Lackfolie zu überziehen. Überzogen werden können beispielsweise Fahrzeugdächer, Türaußenseiten, Motorhauben, Kotflügel sowie andere Teile.

Das Verfahren eignet sich insbesondere zum Überziehen von Fahrzeugteilen, die aus Kunststoff, z.B. aus einem Thermoplastmaterial hergestellt sind. Prinzipiell können aber auch Blechteile mit dem oben beschriebenen Verfahren mit einer Lackfolie überzogen werden. Aus Korrosionsschutzgründen sollten die Blechteile vor dem Überziehen mit einer Korrosionsschutzschicht versehen worden sein, die z.B. im Weg einer Kathodentauchlackierung aufgebracht werden kann.

Mit der Erfindung kann letztlich sogar ein Fahrzeug dargestellt werden, das eine Vielzahl von Außenhautteilen aufweist, bei denen sämtliche großflächigen Außenhautteile, in Bereichen, die bei geschlossenen Türen und Klappen von außen sichtbar sind, mit einer Lackfolie überzogen sind.

Wenngleich die Erfindung in der vorliegenden Beschreibung und in den Patentansprüchen im Zusammenhang mit Fahrzeugteilen beschrieben wurde, sei ausdrücklich erwähnt, dass die Erfindung und der Schutzbereich der Patentansprüche nicht auf das "Überziehen" von Fahrzeugteilen beschränkt ist, sondern dass auch das "Überziehen" anderer Bauteile erfasst ist.

Im Folgenden wird die Erfindung im Zusammenhang mit der Zeichnung näher erläutert. Es zeigen:
- Figuren 1, 2: Das Grundprinzip der Erfindung in schematischer Dar- stellung;
- Figuren 3 - 5: das Umschlagen einer Lackfolie um Kanten eines zu überziehenden Fahrzeugteils;
- Figur 6: das Andrücken der Lackfolie im Kantenbereich;
- Figur 7: das Abtrennen der umgeschlagenen Lackfolie im kanten- nahen Bereich; und
- Figur 8: das Entfernen des Lackfolienverschnitts.

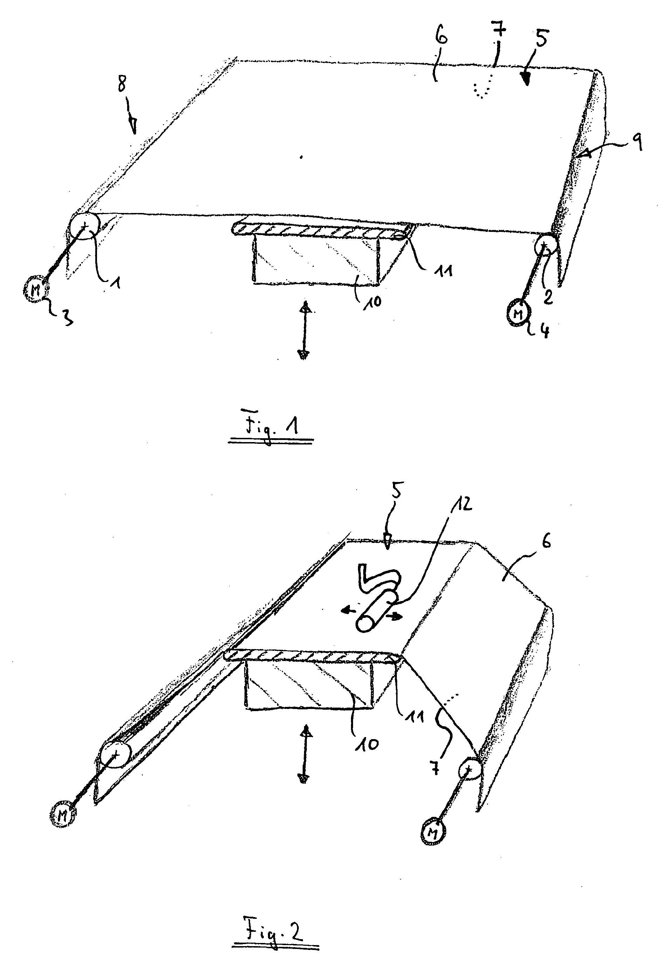

Figur 1 zeigt eine Spanneinrichtung zum Aufspannen einer Lackfolie. Die Spanneinrichtung ist hier stark vereinfacht und lediglich schematisch in Form zweier drehbar angeordneter Rollen 1, 2 dargestellt, die jeweils durch einen zugeordneten Motor 3 bzw. 4 gedreht bzw. vorgespannt werden können. Bei den Motoren 3, 4 kann es sich beispielsweise um Elektromotoren handeln. Mittels einer hier nicht näher dargestellten Abroll- und/oder Greifeinrichtung wird eine Lackfolie 5 von einer hier nicht näher dargestellten Lackfolienrolle abgerollt und auf die Spanneinrichtung 1, 2 gelegt. Die Lackfolie 5 weist eine Vorderseite 6 und eine selbstklebende Rückseite 7 auf. Vor dem Aufbringen der Lackfolie 5 auf die Spanneinrichtung 1, 2 wird eine hier nicht näher dargestellte Schutzfolie, welche die selbstklebende Rückseite 7 vor Verschmutzung schützt, automatisch gesteuert durch eine Abzieheinrichtung abgezogen.

Die Lackfolie 5 wird dann an der Spanneinrichtung, d.h. an den Spannrollen 1, 2 fixiert. Die Fixierung der Lackfolie kann z.B. mittels der auf der Rückseite 7 befindlichen Kleberschicht erfolgen. Alternativ oder ergänzend dazu kann die Lackfolie 5 an ihren die Spannrollen 1, 2 berührenden Randbereichen 8, 9 durch Fixiermittel, z.B. durch Andrückelemente, Klemmeinrichtungen o.ä. fixiert werden. Sobald die Lackfolie 5 an den Spannrollen 1, 2 fixiert ist, wird die Lackfolie 5 faltenfrei gespannt. Wie aus Figur 1 ersichtlich ist, wird die Lackfolie 5 frei im Raum aufgespannt, d.h. nur an ihren Randbereichen 8, 9 gehalten, nicht aber in ihrem Mittelbereich.

Anschließend wird ein an einer Halteeinrichtung 10 befestigtes, mit Lackfolie zu überziehendes Fahrzeugteil 11 an die Rückseite 7 der Lackfolie 5 herangefahren. Bei dem hier gezeigten Ausführungsbeispiel kann die Halteeinrichtung 10 zusammen mit dem Fahrzeugteil 11 relativ zu der aufgespannten Lackfolie verfahren werden.

Bei dem in den Figuren 1, 2 dargestellten Fahrzeugteil 11 handelt es sich um ein im Wesentlichen ebenes Fahrzeugteil. Selbstverständlich können mit dem beschriebenen Verfahren auch Fahrzeugteile mit einer Lackfolie überzogen werden, die eine komplexe dreidimensional geformte Oberfläche mit konkaven und konvexen Oberflächenbereichen aufweisen. Das Fahrzeugteil 11 wird zumindest "soweit" an die Rückseite 7 der Lackfolie 5 herangefahren, dass es in einem oder mehren erhabenen Bereichen die Rückseite 7 der Lackfolie 5 berührt.

Ausgehend von diesem Zustand, in dem das Fahrzeugteil 11 die Rückseite 7 der Lackfolie 5 zumindest teilweise berührt, wird die Lackfolie 5 mittels eines automatisiert gesteuerten walzenartigen Werkzeugs 12 gegen das Fahrzeugteil 11 gedrückt, d.h. auf der wie auch immer strukturierten Oberfläche des Fahrzeugteils 11 entsprechend der Oberflächenstruktur "glatt gewalzt". Das walzenartige Werkzeug 12 ist hierzu entsprechend elastisch. Beispielsweise weist es eine aus einem Elastomer hergestellte Oberflächenschicht auf. Alternativ dazu kann auch eine "Filzwalze" verwendet werden.

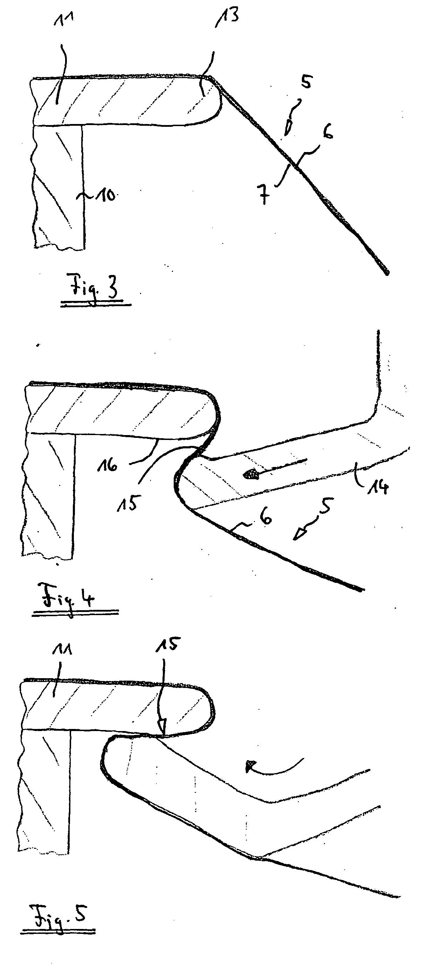

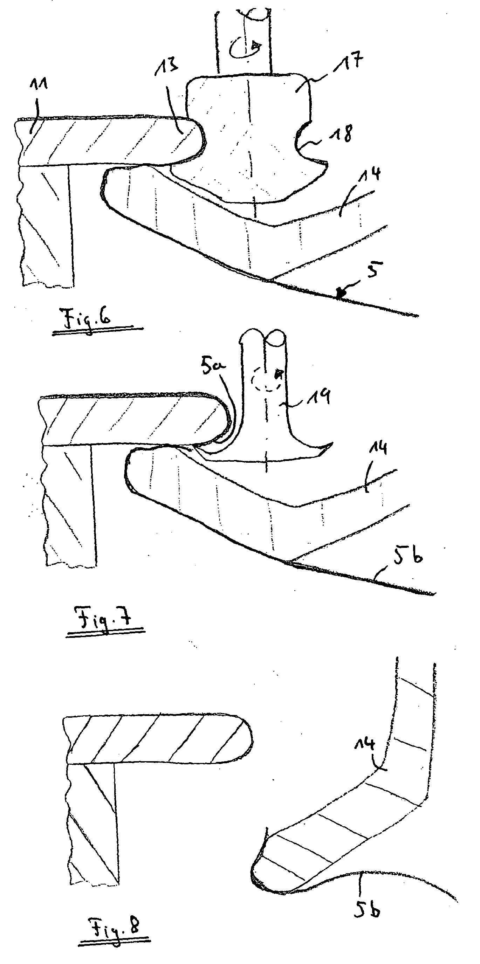

Sobald das Fahrzeugteil 11 großflächig mit der Lackfolie 5 beklebt ist, erfolgt die "Bearbeitung" der Randbereiche des Fahrzeugteils 11, was in Zusammenhang mit den Figuren 3 bis 8 näher erläutert wird.

Ausgehend von dem in Figur 2 gezeigten Zustand wird die Lackfolie 5 um eine Kante 13 des Fahrzeugteils 11 umgeschlagen. Das Umschlagen erfolgt ebenfalls automatisiert gesteuert mittels eines "schieberartigen" Umschlagwerkzeugs 14, das gegen die Vorderseite 6 der Lackfolie 5 drückt und dabei zumindest geringfügig auf der Vorderseite 6 der Lackfolie 5 entlang gleitet. Das Umschlagwerkzeug 14 wird soweit bewegt, bis ein umzuschlagender Abschnitt 15 der Lackfolie 5 an einer Rückseite 16 des Fahrzeugteils 11 anliegt.

Anschließend wird die Lackfolie 5 gezielt im Kantenbereich 13 des Fahrzeugteils 11 an die Kante 13 angedrückt. Hierfür wird ein rollenartiges Werkzeug 17 verwendet, das eine umlaufende rillen- bzw. nutartige Vertiefung 18 aufweist, deren Kontur der Außenkontur der Kante 13 sowie der Vorder- bzw. Rückseite des Kantenbereichs 13 angepasst ist. Das Werkzeug 17 wird z.B. mittels eines Roboters entlang der Kante 13 verfahren, so dass das Werkzeug 17 mit seiner rillen- bzw. nutartigen Vertiefung auf der um die Kante 13 umgeschlagenen Lackfolie abrollt und diese dabei fest gegen den Kantenbereich drückt.

Während bzw. nach dem Andrücken der Lackfolie 5 im Kantenbereich wird der umgeschlagene Abschnitt 5a der Lackfolie mittels eines Trennwerkzeugs, das hier durch ein rotierendes Messer 19 gebildet ist, von dem übrigen, an der Spanneinrichtung fixiert bleibenden Lackfolienabschnitt 5b, der letztlich Verschnitt darstellt, abgetrennt. Anschließend wird der Verschnitt 5b mittels des Umschlagwerkzeugs 14 entfernt.

## Patentansprüche

1. Verfahren zum Applizieren einer Lackfolie (5) auf ein Bauteil (11), mit folgenden Schritten:
- Bereitstellen einer Lackfolie (5), die eine Vorderseite (6) und eine Rückseite (7) aufweist,
- Automatisiert gesteuertes Aufspannen der Lackfolie (5) mittels einer Spanneinrichtung (1, 2),
- Heranbringen eines Bauteils (11) an die Lackfolie (5) mittels einer automatisiert gesteuerten Verfahreinrichtung (10), so dass die Rückseite (7) der Lackfolie (5) und eine zu überziehende Vorderseite des Bauteils (11) an mindestens einer Stelle gegeneinander drücken,
**gekennzeichnet durch** den Schritt,
- Andrücken weiterer Bereiche der Lackfolie (5) gegen die Vorderseite des Bauteils (11), das ein Karosserieteil ist, mittels einer Andrückeinrichtung (12), die automatisiert gesteuert relativ zur Lackfolie (5) und relativ zu dem Karosserieteil (11) verfahren wird, wobei das Bauteil (11) ein Karosseriebauteil eines Fahrzeugs ist und die Rückseite (7) der Folie selbstklebend ist.

2. Verfahren nach Anspruch 1,
**dadurch gekennzeichnet, dass** die Spanneinrichtung (1, 2) mindestens eine, insbesondere mehrere entlang von Randbereichen des Karosserieteils (11) angeordnete Spannrollen (1, 2) aufweist, an der bzw. an denen die Lackfolie (5) fixiert ist, wobei auf die mindestens eine Spannrolle (1, 2) ein zum Aufspannen der Lackfolie (5) erforderliches Drehmoment (M) aufgebracht wird.

3. Verfahren nach einem der Ansprüche 1 oder 2,
**dadurch gekennzeichnet, dass** in der Nähe der Spanneinrichtung eine Bevorratungseinrichtung vorgesehen ist, in der mehrere Lackfolienrollen mit unterschiedlichen Lackfolien vorgehalten werden.

4. Verfahren nach einem der Ansprüche 1 bis 3,
**dadurch gekennzeichnet, dass** mittels einer automatisiert gesteuerten Abrolleinrichtung und/oder mittels einer Greifeinrichtung ein Stück Lackfolie (5) von einer bereitgestellten Lackfolienrolle abgerollt wird.

5. Verfahren nach einem der Ansprüche 1 bis 4,
**dadurch gekennzeichnet, dass** eine Greifeinrichtung mit mehreren Saugnäpfen vorgesehen ist, wobei mittels der Greifeinrichtung ein von der Lackfolienrolle abgerolltes Stück Lackfolie (5) erfasst und auf die Spanneinrichtung (1, 2) gebracht wird.

6. Verfahren nach einem der Ansprüche 1 bis 5,
**dadurch gekennzeichnet, dass** die Andrückeinrichtung eine Andrückrolle bzw. Andrückwalze (12) aufweist, die gegen die Vorderseite (6) der Lackfolie (5) gedrückt wird und die beim Verfahren der Andrückeinrichtung auf der Lackfolie abrollt.

7. Verfahren nach einem der Ansprüche 1 bis 6,
**dadurch gekennzeichnet, dass** die Lackfolie (5) vor und/oder während des Andrückens gegen das Karosserieteil (11) erwärmt wird.

8. Verfahren nach Anspruch 7,
**dadurch gekennzeichnet, dass** das Erwärmen der Lackfolie mittels Warmluft erfolgt.

9. Verfahren nach einem der Ansprüche 1 bis 8,
**dadurch gekennzeichnet, dass** die Lackfolie (5) um mindestens eine Kante (13) des Karosserieteils (11) umgeschlagen wird.

10. Verfahren nach Anspruch 9,
**dadurch gekennzeichnet, dass** das Umschlagen mittels eines schieberartigen Umschlagwerkzeugs (14) erfolgt, das automatisiert gesteuert gegen die Vorderseite (6) der Lackfolie (5) drückt.

11. Verfahren nach einem der Ansprüche 9 oder 10,
**dadurch gekennzeichnet, dass** ein umgeschlagener Abschnitt (15) der Lackfolie (5) gegen das Karosserieteil (11), insbesondere gegen eine der Vorderseite des Karosserieteils (11) abgewandte Rückseite (16) des Karosserieteils (11) gedrückt wird.

12. Verfahren nach einem der Ansprüche 9 bis 11,
**dadurch gekennzeichnet, dass** das Andrücken des umgeschlagenen Abschnitts (15) mittels eines rollenartigen Werkzeugs (17) erfolgt, das eine umlaufende rillenartige Vertiefung (18) aufweist, wobei durch automatisiert gesteuertes Verfahren des rollenartige Werkzeugs (17) entlang der Kante (13) des Karosserieteils (11) das rollenartige Werkzeug (17) mit seiner rillenartigen Vertiefung (18) auf der Kante (13) abrollt.

13. Verfahren nach einem der Ansprüche 9 bis 12,
**dadurch gekennzeichnet, dass** der umgeschlagene Abschnitt (15) während oder nach dem Andrücken desselben von der durch die Spanneinrichtung (1, 2) gehaltenen Lackfolie (5b) abgetrennt wird.

14. Verfahren nach einem der Ansprüche 1 bis 13,
**dadurch gekennzeichnet, dass** die Lackfolie (5) erst nach dem Bekleben der Vorderseite des Karosserieteils (11) und nach dem Umschlagen der Lackfolie (5) auf ihr endgültiges Format beschnitten wird.

15. Verfahren nach einem der Ansprüche 9 bis 14,
**dadurch gekennzeichnet, dass** die Lackfolie (5) vor, während und/oder nach dem Umschlagen und Andrücken im Kantenbereich (13) erwärmt wird.

16. Verfahren nach einem der vorangehenden Ansprüche,
**dadurch gekennzeichnet, dass** die mindestens eine Spannrolle (1) während des Andrückens und/oder während des Umschlagens der Lackfolie (5) automatisiert gesteuert zumindest geringfügig gedreht wird, wodurch Folienmaterial zugegeben oder abgezogen wird und die Lackfolie (5) zumindest in manchen Bereichen gedehnt wird.

17. Verfahren nach einem der Ansprüche 1 bis 16,
**dadurch gekennzeichnet, dass** die gesamte Vorderseite des Karosserieteils (11) mit Lackfolie (5) überzogen wird.

18. Verfahren nach einem der Ansprüche 1 bis 17,
**dadurch gekennzeichnet, dass** das Karosserieteil (11) ein Kunststoffteil ist, insbesondere dass es sich um ein aus einem Thermoplastmaterial hergestelltes Kunststoffteil handelt.

19. Verfahren nach einem Ansprüche 1 bis 17,
**dadurch gekennzeichnet, dass** das Karosserieteil (11) aus Blech besteht und mit einer Korrosionsschutzschicht überzogen ist.

## Claims

1. A method of applying a paint film (5) to a component (11) in the following steps:
- providing a paint film (5) having a front (6) and a back (7),
- automatically controlled stretching of the paint film (5) via a stretching device (1, 2),
- conveying a component (11) to the paint film (5) on an automatically controlled travelling device (10) so that the back (7) of the film (5) and the front of the component (7) for coating are pressed against one another at at least one place,
**characterised by** the following step:
- pressing other regions of the film (5) against the front of the component (11), i.e. a body part, using a pressure device (12) which is moved under automatic control relative to the paint film (5) and relative to the body part (11), wherein the component (11) is a vehicle body component and the back (7) of the film is self-adhesive.

2. A method according to claim 1,
**characterised in that** the stretching device (1, 2) has at least one, or especially a number of, stretching rollers (1, 2) disposed along edge regions of the body part (11), the film (5) being fixed to the roller or rollers, wherein a torque (M) for stretching the film (5) is applied to the at least one stretching roller (1, 2).

3. A method according to claim 1 or claim 2,
**characterised in that** a supply device is provided near the stretching device and contains a number of rolls of different paint films.

4. A method according to any of claims 1 to 3,
**characterised in that** a piece of film (5) is unrolled from a prepared film roller by an automatically controlled unrolling device and/or by a clamping device.

5. A method according to any of claims 1 to 4,
**characterised in that** a gripping device with a number of suction caps is provided, wherein the gripping device grips a portion of film (5) unrolled from the roller and brings it to the stretching device (1 , 2).

6. A method according to any of claims 1 to 5,
**characterised in that** the pressure device is a pressure roller or cylinder (12) which is pressed against the front (6) of the film (5) and rolls on the film when the pressure device moves.

7. A method according to any of claims 1 to 6,
**characterised in that** the film (5) is heated before and/or while pressed against the body part (11).

8. A method according to claim 7,
**characterised in that** the film is heated with hot air.

9. A method according to any of claims 1 to 8,
**characterised in that** the film (5) is wrapped round at least one edge (13) of the body part (11).

10. A method according to claim 9,
**characterised in that** the film is wrapped by a tool (14) in the form of a slide, which presses against the front (6) of the film (5) under automatic control.

11. A method according to claim 9 or claim 10,
**characterised in that** a wrapped portion (15) of the film (5) is pressed against the body part (11), especially against a back (16) of the body part (11) remote from the front of the body part (11).

12. A method according to any of claims 9 to 11,
**characterised in that** the wrapped portion (15) is pressed by a cylindrical tool (17) formed with a peripheral groove-like recess (18), wherein the groove-like recess (18) of the cylindrical tool (17) is rolled on the edge (13) by automatically controlled movement of the cylindrical tool (17) along the edge (13) of the body part (11).

13. A method according to any of claims 9 to 12,
**characterised in that** the wrapped part (15) is cut off while or after being pressed by the paint film (5b) held by the stretching device (1, 2).

14. A method according to any of claims 1 to 13,
**characterised in that** the film (5) is not cut to its final shape before being pasted on the front of the body part (11) and until being wrapped.

15. A method according to any of claims 9 to 14,
**characterised in that** the film (5) is heated before, while and/or after being wrapped and pressed on the edge region (13).

16. A method according to any of the preceding claims,
**characterised in that** the at least one stretching roller (1), under automatic control, is at least slightly rotated while the film (5) is being pressed and/or wrapped, with the result that film material is added or removed and the film (5) is stretched, at least in many regions.

17. A method according to any of claims 1 to 16,
**characterised in that** the entire front of the body part (11) is covered with the film (5).

18. A method according to any of claims 1 to 17,
**characterised in that** the body part (11) is a plastics material part, especially a plastics material part made of thermoplastic material.

19. A method according to any of claims 1 to 17,
**characterised in that** the body part (11) is of metal and coated with an anti-corrosion layer.

## Revendications

1. Procédé d'application d'un film laqué (5) sur une pièce (11) comprenant les étapes consistant à :
- préparer un film laqué (5) ayant une face avant (6) et une face arrière (7),
- étirer le film laqué (5) par commande automatique au moyen d'un dispositif tendeur (1, 2),
- positionner une pièce (11) sur le film laqué (5) au moyen d'un dispositif de transfert (10) à commande automatique de sorte que la face arrière (7) du film laqué (5) et une face avant à revêtir de la pièce (11) soient comprimées l'une contre l'autre dans au moins une zone, **caractérisé en ce qu'**
il comporte les étapes consistant à :
- comprimer d'autres zones du film laqué (5) contre la face avant de la pièce (11) constituée par une pièce de carrosserie au moyen d'un dispositif de compression (12) qui est déplacé par commande automatique par rapport au film laqué (5) et à la pièce de carrosserie (11), cette pièce (11) étant un élément de carrosserie d'un véhicule et la face arrière (7) du film étant autoadhésive.

2. Procédé conforme à la revendication 1,
**caractérisé en ce que**
le dispositif tendeur (1, 2) comporte au moins un, en particulier plusieurs rouleaux tendeurs (1, 2) montés le long des zones de bord de la pièce de carrosserie (11) sur lequel ou lesquels est fixé le film laqué (5), sur ce ou ces rouleau(x) tendeur(s) (1, 2) étant appliqué le couple de rotation (9) nécessaire pour tendre le film laqué (5).

3. Procédé conforme à l'une des revendications 1 et 2,
**caractérisé en ce qu'**
à proximité du dispositif tendeur est prévu un dispositif de stockage dans lequel peuvent être emmagasinés plusieurs rouleaux de film laqué avec des films laqués différents.

4. Procédé conforme à l'une des revendications 1 à 3,
**caractérisé en ce qu'**
un tronçon de film laqué (5) est déroulé d'un rouleau de film laqué préparé au moyen d'un dispositif de déroulement à commande automatique et/ou d'un dispositif de préhension.

5. Procédé conforme à l'une des revendications 1 à 4,
caractérisé en qu'
il est prévu un dispositif de préhension comportant plusieurs ventouses, ce dispositif de préhension détectant un tronçon de film laqué (5) déroulé du rouleau de film laqué et le transférant sur le dispositif tendeur (1, 2).

6. Procédé conforme à l'une des revendications 1 à 5,
**caractérisé en ce que**
le dispositif de compression comporte un rouleau presseur ou un cylindre presseur (2) qui est comprimé contre la face avant (6) du film laqué (5) et qui, lors du déplacement du dispositif de compression roule sur le film laqué.

7. Procédé conforme à l'une des revendications 1 à 6,
**caractérisé en ce qu'**
avant et/ou pendant sa compression contre la pièce de carrosserie (11) le film laqué (5) est chauffé.

8. Procédé conforme à la revendication 7,
**caractérisé en ce que**
le chauffage du film laqué est effectué au moyen d'air chaud.

9. Procédé conforme à l'une des revendications 1 à 8,
**caractérisé en ce que**
le film laqué (5) est rabattu autour d'au moins une arête (13) de la pièce de carrosserie (11).

10. Procédé conforme à la revendication 8,
**caractérisé en ce que**
le rabattement est effectué au moyen d'un outil de rabattement (14) de type coulisseau à commande automatique qui comprime le film laqué (5) contre la face avant (6).

11. Procédé conforme à l'une des revendications 1 et 10,
**caractérisé en ce qu'**
un segment rabattu (15) du film laqué (5) est comprimé contre la pièce de carrosserie (11) en particulier contre une face arrière (16) de la pièce de carrosserie (11) située à l'opposée de la face avant de cette pièce de carrosserie (11).

12. Procédé conforme à l'une des revendications 9 à 11,
**caractérisé en ce que**
la compression du segment (15) rabattu est effectuée au moyen d'un outil (17) de type rouleau qui comporte un évidement périphérique (18) en forme de rainure, lors du déplacement à commande automatique de cet outil de type rouleau (17) le long de l'arête (13) de la partie de carrosserie (11) cet outil de type rouleau (17) roulant sur l'arête (13) par son évidement (18) en forme de rainure.

13. Procédé conforme à l'une des revendications 9 à 12,
**caractérisé en ce que**
le segment rabattu (15) est séparé du film laqué (5b) maintenu par le dispositif tendeur (1, 2) pendant ou après sa compression.

14. Procédé conforme à l'une des revendications 1 à 13,
**caractérisé en ce que**
le film laqué (5) est découpé à son format final seulement après le collage de la face avant de la partie de carrosserie (11) et après le rabattement de ce film laqué (5).

15. Procédé conforme à l'une des revendications 9 à 14,
**caractérisé en ce que**
le film laqué (5) est chauffé avant, pendant et/ou après le rabattement et la compression dans la zone d'arête (13).

16. Procédé conforme à l'une des revendications précédentes,
**caractérisé en ce que**
le rouleau tendeur (1) est au moins faiblement déplacé en rotation en étant commandé automatiquement pendant la compression et/ou pendant le rabattement du film laqué (5), de sorte que du matériau du film soit ajouté ou retiré et que le film laqué (5) soit étiré au moins dans quelques zones.

17. Procédé conforme à l'une des revendications 1 à 5,
**caractérisé en ce que**
la totalité de la face avant de la pièce de carrosserie (11) est recouverte du film laqué (5).

18. Procédé conforme à l'une des revendications 1 à 17,
**caractérisé en ce que**
la pièce de carrosserie (11) est une pièce en matériau synthétique, et en particulier une pièce en matériau synthétique obtenue à partir d'un matériau thermoplastique.

19. Procédé conforme à l'une des revendications 1 à 17,
**caractérisé en ce que**
la pièce de carrosserie (11) est une pièce en tôle et est recouverte d'un revêtement de protection contre la corrosion.
